# DEMANDE DE BREVET EUROPEEN

(11) **EP 0 994 631 A1**
(43) Date de publication de la demande: **19.04.2000**
(21) Numéro de dépôt: 99402321.6
(22) Date de dépôt: 23.09.1999
(51) Int. Cl.: H04Q 7/24

(54) **Procede et systeme de telephonie mobile utlisant des messages de signalisation avec des niveaux de priorite**

(30) Priorité: 15.10.1998 FR 9812930
(71) Demandeur: ALCATEL, 75008 Paris (FR)
(72) Inventeur: Charpentier, Jean, 78220 Viroflay (FR); Issenmann, Edouard, 78150 Le Chesnay (FR); Larousse, Roger, 22700 Perros Guirec (FR); Lohat, Patrick, 78360 Montesson (FR)
(74) Mandataire: Sciaux, Edmond

(57) **Abrégé**

Dans un système du genre GSM, des restaurations du registre de localisation nominal (HLR) sont programmées après certains incidents à partir d'un registre de sauvegarde (SG). L'invention propose que les centres de commutation (MSC) introduisent une différence entre deux classes de demandes de mises à jour qu'ils adressent au registre de localisation nominal dans deux cas différents. Dans l'une de ces classes un message fait suite à un changement de zone d'une station mobile (MS) et est prioritaire. Dans l'autre classe un message fait suite à une restauration du registre de localisation nominal et tend à un rétablissement fréquemment inutile de la conformité des données dans ce registre (HLR) et dans les registres (VLR) des centres. Cette autre classe reçoit un bas niveau de priorité qui évite des défauts de la disponibilité du registre de localisation nominal.

Application à la téléphonie.

## Description

La présente invention concerne un procédé et un système de téléphonie mobile. Un système de ce genre est connu sous l'appellation "GSM" pour "Groupe Spécial Mobile". Selon une description simplifiée il inclut des stations mobiles portées par des utilisateurs respectifs de ces stations, ces utilisateurs étant des abonnés du système. Ces stations permettent de réaliser des liaisons par radio avec des centres de commutation radio mobile appelés "MSC" pour Mobile service Switching Center". Ces centres ont des zones de couverture respectives. Chaque telle station permet à son utilisateur d'être l'un des correspondants d'une communication le reliant à au moins un autre correspondant par l'intermédiaire d'un centre visité par cette station. Ce centre est celui des centres MSC dans la zone de couverture duquel cette station se trouve provisoirement. Au delà de ce centre la communication considérée passe par le reste du système et éventuellement, si cet autre correspondant n'est pas abonné à ce système, par le réseau téléphonique commuté public qui est appelé "PSTN" pour "Public Switched Telephone Network".

Pour permettre l'établissement et la facturation des communications,, d'une part chaque centre MSC a en mémoire l'identité de chacune des stations mobiles qui visitent ce centre, d'autre part un registre de localisation nominal dit "HLR" pour "Home Location Register" a en mémoire des données concernant toutes les stations mobiles du système. Les données contenues dans ce registre incluent notamment les localisations de ces stations, c'est à dire les identités des centres MSC visités par ces stations.

De nombreux messages sont envoyés à ce registre pour lui demander des informations nécessaires à l'établissement de communications qui passent par le système parce que l'un au moins des correspondants à relier par ces communications est un abonné au système. C'est pourquoi les données contenues dans ce registre font l'objet d'une mise à jour individuelle après chaque déplacement faisant passer une station mobile d'une zone à une autre, ainsi qu'après chaque changement du statut d'un utilisateur. Ce statut définit des conditions dans lesquelles cet utilisateur a accès au système et dans lesquelles il doit être facturé. Il constitue l'une des données concernant la station mobile de cet utilisateur Par ailleurs ces données font collectivement l'objet d'opérations de sauvegarde dans un autre registre. Ces opérations sont périodiques de sorte que ce registre, dit de sauvegarde, ne contient pas les localisations des stations mobiles qui ont fait un déplacement depuis la dernière telle opération. Certaines modifications telles que celles qui concernent le statut de certaines catégories d'utilisateurs sont effectuées d'abord dans ce dernier registre.

Comme suite à une telle modification effectuée dans le registre de sauvegarde, ou comme suite à d'autres incidents pouvant affecter la validité des données contenues dans le registre HLR, ces dernières font l'objet d'une mise à jour collective qui est appelée "restauration" et qui est faite à partir des données du registre de sauvegarde. Cette restauration est signalée aux centres MSC. Au premier contact qu'une station mobile prend après une telle restauration avec le centre MSC qu'elle visite, ce centre envoie un message au registre HLR pour réaliser une mise en conformité des données qui concernent cette station et qui sont respectivement contenues dans ce centre et dans ce registre. La localisation de cette station est mise à jour dans ce registre à partir de l'identité du centre envoyant ce message et les données définissant le statut de l'utilisateur de cette station sont mises à jour dans ce centre à partir des données contenues dans ce registre.

Les systèmes connus du genre ci-dessus présentent l'inconvénient que, lorsque l'établissement d'une communication est demandé à un tel système, cet établissement est parfois empêché par un défaut de disponibilité propre au système, c'est à dire que l'appel demandant cet établissement n'aboutit pas alors que le correspondant appelé est disponible.

La présente invention a notamment pour but de limiter d'une manière simple et peu coûteuse les défauts de disponibilité d'un tel système. Et dans ce but elle a notamment pour objet un procédé qui inclut de manière connue des opérations effectuées par un registre de localisation nominal contenant des données respectives d'une pluralité de stations mobiles. Chaque telle opération constitue une exploitation d'un message déclenchant cette opération. Pour pouvoir sélectionner certains de ces messages afin d'assurer leur exploitation dans des situations de surcharge, ce registre donne à chaque message un niveau de priorité choisi dans une échelle de tels niveaux.

Certaines des opérations effectuées par ce registre sont des mises à jour collectives des données des stations mobiles. Chaque telle mise à jour constitue une restauration et est signalée à une pluralité de centres de commutation contenant chacun les données de celles des stations mobiles qui se trouvent dans une zone de ce centre.

D'autres de ces opérations sont des mises à jour individuelles. Chaque telle mise à jour constitue l'exploitation d'un message émis par un centre de commutation, et elle met à jour dans le registre de localisation nominal les données d'une station mobile constituant une station concernée par ce message.

Certaines de ces mises à jour individuelles sont des mises à jour pour visite. Le message demandant une telle mise à jour pour visite est émis par un centre de commutation pour exploiter un avis de visite signalant une arrivée de la station concernée par ce message dans la zone de ce centre, ce message constituant une demande pour visite.

D'autres mises à jour individuelles sont des mises jour après restauration. Le message demandant une telle mise à jour après restauration est émis par un centre de commutation pour exploiter un contact entre ce centre et la station concernée par ce message. Il constitue une demande après restauration. Il est émis lorsque trois conditions sont réunies :
- cette station se trouve dans la zone de ce centre,
- ce contact est postérieur à un précédent message demandant une mise à jour pour visite et émis par ce centre, cette station étant concernée par ce précédent message, et
- ce contact est un premier contact entre cette station et ce centre depuis qu'une restauration a été signalée à ce centre.

Le procédé de cette invention est caractérisé par le fait que les centres de commutation introduisent entre les demandes pour visite et les demandes après restauration une différence qui est percue par le registre de localisation nominal et à l'aide laquelle ce registre donne aux demandes après restauration un niveau de priorité plus bas qu'aux demandes pour visite.

Dans le cadre de cette invention il a été trouvé qu'une part importante des défauts de disponibilité constatés dans les systèmes connus était liée au débit des messages envoyés au registre de localisation nominal par les centres de commutation, ce débit dépassant parfois la capacité d'exploitation offerte à ces messages par ce registre. Et il a été compris qu'une abstention ou un retard de l'exploitation de tels messages ne créerait directement qu'un petit nombre de défauts de disponibilité du système si cette abstention était limitée en pratique à ceux de ces messages qui sont reçus par ce registre, à la suite des restaurations de ce dernier, en même temps que d'autres messages nécessaires à l'établissement d'une communication actuellement demandée ou pouvant être demandée par la suite. Il a été plus particulièrement compris que ce nombre était bien inférieur à celui des défauts de disponibilité qu'une abstention de réponse à ces autres messages crée dans les systèmes connus. Cette invention permet ainsi d'éviter le coût supplémentaire qui serait créé par une augmentation de la capacité de traitement disponible dans ce registre pour exploiter les messages qu'il reçoit, ceci au moins dans le cas où cette augmentation de capacité serait suffisante pour supprimer les défauts de disponibilité liés aux messages envoyés à la suite des restaurations.

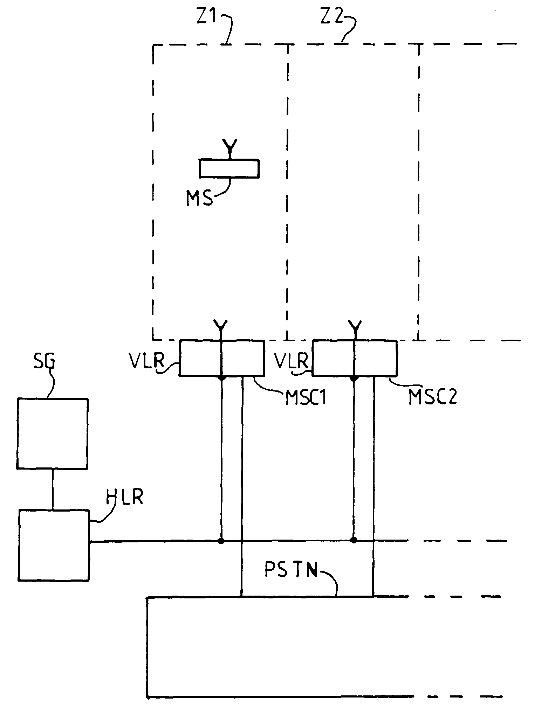

La figure schématique unique ci-jointe représente, à simple titre d'exemple, un système de téléphonie mobile mettant cette invention en oeuvre. Ce système couvre un territoire qui est divisé en une pluralité de zones telles que Z1 et Z2 définies par ce système. Il a des abonnés qui se déplacent entre ces deux zones. Il comporte des organes munis de programmes respectifs et de liaisons mutuelles. Ces programmes définissent des messages, des classes de ces messages et des opérations. Ces opérations incluent la formation, la transmission et/ou l'exploitation de certains des messages, chaque opération étant effectuée par un organe pour exploiter un message reçu par cet organe et associé à cette opération. Ces messages et ces opérations sont tels que ce système puisse établir des communications à travers certains de ces organes, chaque communication transmettant des informations entre deux correspondants de cette communication. L'un de ces deux correspondants est un abonné du système, l'autre pouvant, soit être lui aussi un tel abonné, soit être relié au système par l'intermédiaire du réseau téléphonique commuté public PSTN. L'un de ces deux correspondants est à l'origine de l'établissement de cette communication et constitue un appelant de cette communication, l'autre de ces deux correspondants constitue un appelé de cette communication.

Les organes permettant d'établir de telles communications sont notamment les suivants :
- Des stations mobiles telles que MS. Chaque telle station a une identité. Elle appartient à un utilisateur qui est l'un des abonnés du sytème et elle constitue un intermédiaire entre cet utilisateur et ce système. Elle a des paramètres qui définissent par exemple le statut de son utilisateur vis à vis du système. Elle peut être déplacée par son utilisateur dans et entre les zones du système. Sa fonction d'intermédiaire est rendue compatible avec sa mobilité par le fait que c'est par radio qu'elle est apte à émettre et à recevoir les informations et les messages. Elle se présente typiquement sous la forme d'un téléphone mobile porté par son utilisateur ou par un véhicule de ce dernier. Son identité est typiquement définie par une carte dite SIM insérée dans un appareil standardisé.
- Une pluralité de centres de commutation tels que MSC1 et MSC2. Ces centres ont des identités respectives et les zones telles que Z1 et Z2 leur appartiennent respectivement. Chaque telle zone est typiquement divisée en plusieurs cellules couvertes chacune par une antenne du centre auquel cette zone appartient. Quoique certains problèmes soient liés au fait qu'une station mobile peut passer de l'une à l'autre de deux cellules d'une même zone, ces problèmes ne sont pas considérés dans le cadre de cette invention. Grâce à ces antennes chaque centre de commutation est apte à échanger par radio des informations et des messages avec chaque station mobile lorsque cette station est localisée dans la zone de ce centre. Cette station et ce centre constituent alors respectivement une station visiteuse de ce centre et un centre visité par cette station. L'ensemble formé par les deux identités respectives de cette station visiteuse et de ce centre de commutation visité constitue alors une localisation de cette station visiteuse, cette localisation et lesdits paramètres de cette station constituant des données de cette station. Chaque tel centre inclut un registre de localisation de visiteurs VLR constituant une mémoire de ce centre. Ce registre est mis à jour par des messages pour avoir en mémoire les données de toutes les stations visiteuses de ce centre. Il est en outre apte à prendre en mémoire et à sortir de mémoire des signaux d'après restauration qui sont respectivement associés à ces stations visiteuses et dont la fonction sera indiquée plus loin.
- Un registre de localisation nominal HLR ayant en mémoire les données de toutes les stations mobiles du système. Pour tenir compte des modifications qui sont fréquemment apportées à certaines de ces données, ce registre est automatiquement mis à jour par un premier groupe de messages. Par ailleurs, pour l'exploitation des messages qu'il reçoit, il a une capacité prédéterminée qui est parfois dépassée par le débit de ces messages de sorte qu'une exploitation simultanée de tous ces messages serait alors impossible. C'est pourquoi son programme inclut une règle de priorité définissant une échelle de niveaux de priorité et donnant à chaque message reçu un niveau de priorité selon la classe de ce message. Cette règle donne à chaque message reçu par ce registre une probabilité d'être exploité sans délai d'autant plus petite que le niveau de priorité de ce message est plus bas et que le débit des messages reçus par ce registre se rappoche de la capacité d'exploitation de ce registre. Cette règle tend à assurer l'exploitation des messages qui ont les niveaux de priorité les plus hauts. Pour cela elle rejette certains des messages qui ont les niveaux de priorité les plus bas. Elle pourrait retarder seulement l'exploitation des messages rejetés. Typiquement, pour des raisons de simplicité, elle l'empêche d'une manière définitive. Plus particulièrement cette règle pourrait par exemple définir pour chaque niveau de priorité un pourcentage non supérieur à 100 % et constituant un seuil de charge associé à ce niveau, ce seuil de charge étant d'autant plus élevé que ce niveau est plus haut. Cette règle s'opposerait alors à ce qu'un message reçu par le registre de localisation nominal HLR soit exploité par ce registre lorsqu'un taux de charge de ce registre dépasse le seuil de charge associé au niveau de priorité de ce message. Des règles de priorité convenables sont connues des spécialistes et utilisées dans les systèmes du genre GSM.
- Un registre de sauvegarde de localisation SG apte à être mis à jour par un deuxième groupe de messages pour avoir en mémoire les données de toutes les stations mobiles. Ces localisations et paramètres constituent alors des données sauvegardées. Ce deuxième groupe de messages est différent du premier.

Certaines classes de messages et opérations associées vont maintenant être décrites :
- Une classe de messages sera désignée ci-après comme constituée par des avis de visite. Chaque station mobile forme et transmet un tel avis chaque fois que cette station quitte une zone et pénètre dans une autre zone, cette autre zone constituant une nouvelle zone visitée. Cet avis de visite indique au moins l'identité de cette station mobile. Il est reçu par celui des centres de commutation qui a la nouvelle zone visitée. Le centre de commutation ainsi visité réalise une exploitation de cet avis de visite en mettant en mémoire la nouvelle localisation de cette station mobile dans son registre de localisation de visiteurs.
- Une classe de messages appartient à la fois au premier groupe de messages précédemment mentionné et à un groupe de demandes de mise à jour de localisation connu dans le système GSM sous l'appellation "LOCALISATION UPDATE". Plus particulièrement les demandes de cette classe sont respectivement associées aux avis de visite et seront appelées ci-après "demandes de mises à jour pour visite". Chaque centre de commutation réalise une autre exploitation de chaque avis de visite en formant une telle demande associée à cet avis. Cette demande inclut la nouvelle localisation de la station mobile qui a transmis cet avis de visite. Ce centre de commutation transmet cette demande au registre de localisation nominal, ce registre réalisant une exploitation de cette demande en prenant cette nouvelle localisation en mémoire si la règle de priorité n'interdit pas cette exploitation.
- Certains des messages incluant les avis de visite constituent des indications de présence. Chaque telle indication est formée par une station mobile et reçue par le centre de commutation visité par cette station. Elle est donc représentative de la présence de cette station dans la zone de ce centre.
- Une classe de messages est constituée par des appels terminaux. Chaque tel appel est associé à une communication qui est à établir et dont l'appelé est un abonné du système. Cet appel a son origine chez l'appelant de cette communication et il inclut l'identité de la station mobile de cet appelé, cette station constituant une station appelée. Il est reçu et exploité par un centre de commutation qui constitue pour cet appel un point d'accès au système.
- Une classe de messages est constituée par des demandes d'information de routage connue dans le système GSM sous l'appellation "SEND ROUTING INFORMATION". Ces demandes ont un niveau de priorité inférieur à celui des demandes de mise à jour pour visite. Le point d'accès au système réalise une exploitation de chaque appel terminal en formant une demande d'information de routage et en transmettant cette demande au registre nominal de localisation, cette demande d'information de routage contenant les identités de ce point d'accès et de la station appelée.
- Une classe de messages sera désignée ci-après comme constituée par des blocs d'informations de routage. Si la règle de priorité ne l'interdit pas, le registre de localisation nominal réalise une exploitation de chaque demande d'information de routage en formant un bloc d'informations de routage tenant compte de l'identité du point d'accès au système et de l'identité de celui des centres de commutation qui apparait dans ce registre comme visité par la station appelée. Ce registre transmet ce bloc à ce point d'accès et ce point d'accès exploite ce bloc en complétant l'établissement de la communication à établir.
- Une classe de messages appartient au deuxième groupe de messages précédemment mentionnée. Elle est constituée par des messages de sauvegarde formés à des temps successifs par le registre de localisation nominal. Chaque tel message contient les données des stations mobiles qui sont en mémoire dans ce registre. Le registre de sauvegarde exploite ce message en prenant ces données en mémoire pour être mis à jour.
- Une classe de messages appartenant au premier groupe de messages est constituée par des blocs de restauration. Chaque tel bloc est formé par le registre de sauvegarde en réponse à un incident appartenant à une classe d'incidents inscrite dans les programmes du système. Ce bloc contient les données sauvegardées et il est transmis au registre de localisation nominal., Ce registre réalise une première exploitation de ce bloc en prenant ces données en mémoire. Ces données constituent alors des données restaurées et cette première exploitation constitue une restauration.
- Une classe de messages peut être désignée comme constituée par des avis de restauration qui, dans le système GSM, sont appelés "RESET". Le registre de localisation nominal réalise une deuxième exploitation de chaque bloc de restauration en formant un avis de restauration et en transmettant cet avis à chacun des centres de commutation en représentation de la restauration qui est effectuée ou qui vient de l'être. Ce centre exploite cet avis en mettant en mémoire des signaux d'après restauration respectivement associés à tous les stations visiteuses présentes et à venir de ce centre
- Enfin une classe de messages appartenant au premier groupe de messages est constituée par certaines autres demandes de mise à jour de localisation qui seront désignées ci-après comme étant des demandes de mises à jour après restauration. Chaque centre de commutation réalise une exploitation de chaque indication de présence transmise à ce centre par une station mobile en formant une telle demande de mise à jour après restauration si ce centre de commutation a en mémoire un signal d'après restauration associé à cette station. Cette demande inclut la localisation de cette station mobile et elle est transmise au registre de localisation nominal. Ce registre réalise une exploitation de cette demande en prenant cette localisation en mémoire si cette exploitation n'est pas interdite par la règle de priorité. Ce centre de commutation réalise une autre exploitation de cette indication de présence en sortant de mémoire ce signal d'après restauration.

De même que le système connu GSM le système de l'invention utilise avec avantage non seulement les organes, messages et opérations ci-dessus, mais aussi d'autres organes, messages et opérations, notamment pour établir les communications dont seul l'appelant est un abonné du système et pour assurer la sécurité des communications grâce à un cryptage.

Par rapport aux systèmes connus du genre ci-dessus, le système de l'invention est caractérisé par le fait que le programme des centres de commutation crée, entre d'une part les demandes de mise à jour pour visite et d'autre part les demandes de mise à jour après restauration, une différence à laquelle le registre de localisation nominal est sensible et grâce à laquelle, et avec l'aide du programme de ce registre, le niveau de priorité de ces demandes de mise à jour pour visite est rendu supérieur au niveau de priorité de ces demandes de mise à jour après restauration.

De préférence encore, selon l'invention le niveau de priorité des demandes de mise à jour après restauration est en outre rendu inférieur à celui des demandes d'information de routage. Le bas niveau de priorité donné aux demandes de mise à jour après restauration dans le cadre de cette invention permet, pour les raisons précédemment expliquées, de diminuer la fréquence des défauts de disponibilité propres au système.

De préférence, selon cette invention, la différence entre les demandes de mise à jour pour visite et les demandes de mise à jour après restauration est constituée par une indication de non priorité présente seulement dans ces demandes de mise à jour après restauration. Cette manière de constituer une différence exploitable entre ces deux classes de demandes de mise à jour a un effet quant à la modification qui doit être apportée aux programmes des systèmes existants pour mettre cette invention en oeuvre. Elle permet de réaliser cette modification d'une manière simple et peu coûteuse, les demandes de mise à jour après restauration constituant le seul message de signalisation modifié, la modification du programme de registre de localisation nominal étant par ailleurs limitée et facile.

## Revendications

1. Procédé de téléphonie mobile utilisant des messages de signalisation avec des niveaux de priorité, ce procédé incluant des opérations effectuées par un registre de localisation nominal (HLR) pour exploiter des messages reçus par ce registre, ce registre donnant à chacun de ces messages un niveau de priorité choisi dans une échelle de tels niveaux et tel qu'une probabilité d'exploitation de ce message soit d'autant plus faible que ce niveau de priorité est plus bas, ce registre contenant des données respectives d'une pluralité de stations mobiles (MS), certaines desdites opérations étant des mises à jour incluant :
- des mises à jour collectives des dites données des stations mobiles, chacune de ces mises à jour constituant une restauration et étant signalée à une pluralité de centres de commutation (MSC1, MSC2) contenant chacun les dites données de celles des dites stations mobiles qui se trouvent dans une zone de ce centre, et
- des mises à jour individuelles effectuées chacune pour exploiter un dit message émis par un dit centre de commutation, cette mise à jour mettant à jour dans ledit registre de localisation nominal les données d'une dite station mobile constituant une station concernée par ce message, un ensemble de ces mises à jour individuelles incluant :
- des mises à jour pour visite, le dit message demandant chaque dite mise à jour pour visite étant émis par un dit centre de commutation pour exploiter un avis de visite signalant une arrivée de ladite station concernée par ce message dans ladite zone de ce centre, ce message constituant une demande pour visite, et
- des mises jour après restauration, le dit message déclenchant chaque dite mise à jour après restauration étant émis par un dit centre de commutation pour exploiter un contact entre ce centre et une dite station mobile se trouvant dans ladite zone de ce centre et concernée par ce message, ce message constituant une demande après restauration, ce contact étant postérieur à un précédent dit message demandant une dite mise à jour pour visite et émis par ce centre, cette station étant concernée par ce précédent message, ce contact étant un premier contact entre cette station et ce centre après une dite restauration,
ce procédé étant caractérisé par le fait que lesdits centres de commutation introduisent entre les dites demandes pour visite et les dites demandes après restauration une différence percue par ledit registre de localisation nominal, ce registre donnant à ces demandes après restauration un dit niveau de priorité plus bas qu'à ces demandes pour visite.

2. Système de téléphonie mobile utilisant des messages de signalisation avec des niveaux de priorité, ce système définissant des zones et ayant des abonnés, ce système comportant des organes munis de programmes respectifs et de liaisons mutuelles, ces programmes définissant des messages, des classes de ces messages et des opérations, ces opérations incluant la formation, la transmission et/ou l'exploitation de certains desdits messages, chaque dite opération étant effectuée par un dit organe pour exploiter un dit message reçu par cet organe et associé à cette opération, ces messages et ces opérations étant tels que ce système puisse établir des communications à travers certains de ces organes, chaque dite communication transmettant des informations entre deux correspondants de cette communication, l'un au moins de ces deux correspondants étant un dit abonné de ce système, l'un de ces deux correspondants étant à l'origine de l'établissement de cette communication et constituant un appelant de cette communication, l'autre de ces deux correspondants constituant un appelé de cette communication, lesdits organes incluant :
- des stations mobiles (MS) ayant des identités et des paramètres respectifs,, ces stations appartenant à des utilisateurs respectifs constitués par des dits abonnés, chaque dite station mobile constituant un intermédiaire entre son dit utilisateur et ledit système et pouvant être déplacée par cet utilisateur dans et entre lesdites zones, cette station étant apte à émettre et à recevoir par radio des dites informations et des dits messages,
- une pluralité de centres de commutation (MSC1, MSC2) ayant des identités respectives, lesdites zones (Z1, Z2) appartenant respectivement à ces centres de commutation, chaque dit centre de commutation étant apte à échanger des dites informations et des dits messages avec chaque dite station mobile seulement par radio et seulement lorsque cette station est localisée dans ladite zone de ce centre, cette station et ce centre constituant alors respectivement une station visiteuse de ce centre et un centre visité par cette station mobile, l'ensemble formé par les deux identités respectives de cette station visiteuse et de ce centre de commutation visité constituant alors une localisation de cette station visiteuse, cette localisation et lesdits paramètres de cette station constituant des données de cette station, chaque dit centre de commutation (MSC1) incluant un registre de localisation de visiteurs (VLR1) constituant une mémoire de ce centre, ce registre étant apte à être mis à jour par des dits messages pour avoir en mémoire lesdites données des dites stations visiteuses de ce centre, ce registre étant en outre apte à prendre en mémoire et à sortir de mémoire des signaux d'après restauration respectivement associés à ces stations visiteuses ,
- un registre de localisation nominal (HLR) apte à être mis à jour par un premier groupe de dits messages pour avoir en mémoire lesdites données de toutes les dites stations mobiles, ce registre ayant pour lesdits messages qu'il reçoit une capacité d'exploitation pouvant être dépassée par un débit de ces messages, ledit programme de ce registre incluant une règle de priorité définissant une échelle de niveaux de priorité et donnant à chaque dit message pouvant être reçu par ce registre un niveau de priorité choisi dans cette échelle selon la dite classe de ce message, cette règle de priorité donnant à chaque dit message reçu par ce registre une probabilité d'être exploité sans délai d'autant plus petite que ledit niveau de priorité de ce message est plus bas et que ledit débit de messages reçus par ce registre se rapproche de ladite capacité d'exploitation de ce registre, et
- un registre de sauvegarde de localisation (SG) apte à être mis à jour par un deuxième groupe dédits messages pour avoir en mémoire les dites données de toutes les dites stations mobiles, ces localisations et paramètres constituant des données sauvegardées, ce deuxième groupe de messages étant différent dudit premier groupe de messages,
lesdites classes de messages et opérations associées incluant en substance notamment :
- une dite classe des messages constituée par des avis de visite, chaque dite station mobile formant et transmettant un dit avis de visite chaque fois que cette station arrive dans une dite zone constituant une nouvelle zone visitée de sorte que cet avis de visite est reçu par celui des dits centres de commutation qui a la dite nouvelle zone visitée, cet avis de visite indiquant l'identité de cette station mobile, ce centre de commutation réalisant une dite exploitation de cet avis de visite en mettant en mémoire ladite nouvelle localisation de cette station mobile dans son dit registre de localisation de visiteurs,
- une dite classe de messages appartenant audit premier groupe de messages et constituée par des demandes de mise à jour pour visite respectivement associées aux dits avis de visite, chaque dit centre de commutation réalisant une autre dite exploitation de chaque dit avis de visite en formant une dite demande de mise à jour pour visite associée à cet avis, cette demande incluant ladite nouvelle localisation de ladite station mobile qui a transmis cet avis de visite, ce centre de commutation transmettant cette demande audit registre de localisation nominal, ce registre réalisant une dite exploitation de cette demande en prenant cette nouvelle localisation en mémoire si ladite règle de priorité n'interdit pas cette exploitation,
- certains des dits messages incluant lesdits avis de visite constituant des indications de présence formées chacune par une dite station mobile et reçue par ledit centre de commutation visité par cette station mobile de sorte que cette indication est représentative de la présence de cette station dans ladite zone de ce centre,
- une dite classe de messages constituée par des appels terminaux, chaque dit appel terminal étant associé à une dite communication, cette communication étant à établir et ledit appelé de cette communication étant un dit abonné, cet appel incluant l'identité de ladite station mobile de cet appelé et ayant une origine chez ledit appelant de cette communication, cette station mobile constituant une station appelée, cet appel étant reçu et exploité par un dit centre de commutation, ce centre de commutation constituant pour cet appel un point d'accès audit système,
- une dite classe de messages constituée par des demandes d'information de routage, ledit niveau de priorité de ces demandes étant inférieur à celui des dites demandes de mise à jour pour visite, ledit point d'accès réalisant une exploitation du dit appel terminal en formant une dite demande d'information de routage et en transmettant cette demande audit registre nominal de localisation, cette demande d'information de routage contenant les identités de ce point d'accès et de ladite station appelée,
- une dite classe de messages constituée par des blocs d'informations de routage, le dit registre de localisation nominal réalisant une dite exploitation de la dite demande d'information de routage si ladite règle de priorité ne l'interdit pas, ce registre réalisant cette exploitation en formant un dit bloc d'informations de routage tenant compte de l'identité dudit point d'accès et de l'identité de celui des dits centres de commutation qui apparait dans ce registre comme visité par ladite station appelée, ce registre transmettant ce bloc à ce point d'accès, ce point d'accès exploitant ce bloc en complétant l'établissement de ladite communication à établir,
- une dite classe de messages appartenant audit deuxième groupe de messages et constituée par des messages de sauvegarde formés à des temps successifs par ledit registre de localisation nominal, chaque dit message de sauvegarde contenant les dites données des stations mobiles qui sont en mémoire dans ce registre de localisation nominal, ledit registre de sauvegarde exploitant ce message de sauvegarde en prenant ces données en mémoire pour être mis à jour,
- une dite classe de messages appartenant audit premier groupe de messages et constituée par des blocs de restauration, chaque dit bloc de restauration étant formé par ledit registre de sauvegarde en réponse à un incident appartenant à une classe d'incidents inscrite dans lesdits programmes, ce bloc de restauration contenant lesdites données sauvegardées et étant transmis audit registre de localisation nominal, ce registre de localisation nominal réalisant une première exploitation de ce bloc en prenant ces données en mémoire de sorte que ces données constituent alors des données restaurées, cette première exploitation constituant une restauration,
- une dite classe de messages constituée par des avis de restauration, ledit registre de localisation nominal réalisant une deuxième exploitation de chaque dit bloc de restauration en formant un dit avis de restauration et en transmettant cet avis à chacun des dits centres de commutation en représentation de ladite restauration, ce centre de commutation exploitant cet avis en mettant en mémoire des dits signaux d'après restauration respectivement associés à tous les dites stations visiteuses présentes et à venir de ce centre, et
- une dite classe de messages appartenant audit premier groupe de messages et constituée par des demandes de mise à jour après restauration,, chaque dit centre de commutation réalisant une dite exploitation de chaque dite indication de présence transmise à ce centre par une dite station mobile en formant une dite demande de mise à jour après restauration si ce centre de commutation a en mémoire un dit signal d'après restauration associé à cette station, cette demande de mise à jour après restauration incluant ladite localisation de cette station mobile et étant transmise au dit registre de localisation nominal, ce registre de localisation nominal réalisant une dite exploitation de cette demande de mise à jour après restauration en prenant cette localisation en mémoire si cette exploitation n'est pas interdite par ladite règle de priorité, ce centre de commutation réalisant une autre dite exploitation de cette indication de présence en sortant de mémoire ce signal d'après restauration,
le dit système étant caractérisé par le fait que ledit programme des dits centres de commutation crée une différence entre d'une part lesdites demandes de mise à jour pour visite et d'autre part les dites demandes de mise à jour après restauration, ledit registre de localisation nominal étant sensible à cette différence, ledit niveau de priorité de ces demandes de mise à jour pour visite étant supérieur à celui de ces demandes de mise à jour après restauration.

3. Système de téléphonie mobile selon la revendication 2, ledit niveau de priorité des demandes de mise à jour après restauration étant inférieur à celui des dites demandes d'information de routage.

4. Système de téléphonie mobile selon la revendication 2, ladite différence entre les dites demandes de mise à jour pour visite et lesdites demandes de mise à jour après restauration étant constituée par une indication de non priorité présente seulement dans ces demandes de mise à jour après restauration.
